Europäisches Patentamt

European Patent Office

Office européen des brevets

(11) Veröffentlichungsnummer: **0 070 795**
**A1**

(12) # EUROPÄISCHE PATENTANMELDUNG

(21) Anmeldenummer: 82730096.3

(51) Int. Cl.³: **H 04 M 1/02**

(22) Anmeldetag: **14.07.82**

(30) Priorität: 16.07.81 DE 3128427

(71) Anmelder: **Fritz Kuke KG, Am Juliusturm 71-73, D-1000 Berlin 20 (DE)**

(43) Veröffentlichungstag der Anmeldung: **26.01.83** Patentblatt 83/4

(72) Erfinder: **Kuke, Rudolf, Scharfe Lanke 37, D-1000 Berlin 20 (DE)**

(74) Vertreter: **Diehl, Paul, Alt-Moabit 89, D-1000 Berlin 21 (DE)**

(84) Benannte Vertragsstaaten: **AT BE CH FR GB IT LI NL**

(54) **Telefonanlage.**

(57) Durch die Erfindung wird der innerhalb des Gehäuses eines herkömmlichen Telefonapparates vorhandene Installationsraum von dem bisher für die Unterbringung des Weckers benötigten Volumen befreit und kann somit zur Installation zusätzlicher Elemente verwendet werden.

Der Wecker wird erfindungsgemäss aus dem Telefonapparat in die Anschlusseinheit verlegt.

EP 0 070 795 A1

- 1 -

Telefonanlage

Die Erfindung betrifft eine Telefonanlage, die herkömmlicherweise mindestens aus einer Verbindungs- oder Anschlußdose und einem Telefonapparat besteht. Zur akustischen Meldung eines Anrufes ist in dem Telefonapparat ein sog. Wecker installiert.

Die Entwicklung der Telefonapparate läßt erkennen, daß man bestrebt ist, einem Telefonapparat zunehmend mehr Leistungsmerkmale zu verleihen, also beispielsweise die für den Tastenwähler erforderliche Angleichung an die Wählgeschwindigkeit des Nummernschalters, einen Anrufbeantworter, einen einschaltbaren Lautsprecher zum Mithören, eine Freisprecheinrichtung, eine Funkanlage für den drahtlosen Betrieb usw. einzubauen. Dies erfordert i.a. ein größeres Gehäuse des Telefonapparates oder den Anschluß eines Zusatzgerätes.

Der Erfindung liegt die Aufgabe zugrunde, einen Telefonapparat zu schaffen, der das herkömmliche Gehäuse hat und in den dennoch Bauelemente für zusätzliche Leistungsmerkmale eingebaut werden können.

Erfindungsgemäß wird diese Aufgabe dadurch gelöst, daß der Wecker in der Verbindungs- oder Anschlußdose statt im Telefonapparat untergebracht ist.

Das bisher für den Einbau des Weckers benötigte Installationsvolumen des Telefonapparates steht jetzt

- 2 -

für die Installation anderer Elemente zur Verfügung. Andererseits läßt sich der Wecker in eine Verbindungs- oder Anschlußdose mit einem herkömmlichen Gehäuse einsetzen, weil der Installationsraum dieses Gehäuses bei Anwendung der modernen Verbindungstechnik (gedruckte Schaltung in Form von Leiterplatten, elektronische Schaltelemente statt der herkömmlichen elektromechanischen Relais) ohnehin nicht mehr voll ausgenutzt wird.

Die Unterbringung des Weckers in einer Installations- oder Verbindungsdose (Anschalteeinheit für Fernmeldeanlagen) bietet den weiteren Vorteil, daß der Wecker nicht versehentlich, wie dies für den Telefonapparat selbst durchaus vorkommen kann, durch Abdeckung mit schalldämmenden Gegenständen unhörbar gemacht werden kann. Andererseits wird es von dem Fernsprechteilnehmer in vielen Fällen als angenehmer empfunden, wenn der Weckruf in etwas weiterer Entfernung vom Ohr ertönt.

In Weiterbildung der Erfindung ist die Verbindungs- oder Anschlußdose mit einer Steckdose zur Aufnahme des Weckers ausgestattet.

Diese Lösung ist für die Fertigung und Lagerhaltung besonders vorteilhaft, weil nur eine einzige Art von Anschalteeinheiten, nämlich solche mit Steckdose, hergestellt zu werden braucht, und der Wecker mit entsprechenden Steckerstiften bedarfsweise mitgeliefert und anläßlich der Montage mit einem

- 3 -

Handgriff eingesetzt wird.

Die Erfindung wird im folgenden unter Bezugnahme auf einige in der Zeichnung dargestellte Ausführungsbeispiele näher erläutert. Es zeigen:

Fig. 1  das vereinfachte Schaltbild einer erfindungsgemäßen Telefonanlage,

Fig. 2  die schematisch dargestellte Draufsicht einer Anschalteeinheit mit eingebautem Wecker und

Fig. 3  die ebenfalls schematisch dargestellte Draufsicht einer Anschalteeinheit mit Steckdose, daneben, in Seitenansicht, der dazu passende Wecker mit Steckerstiften.

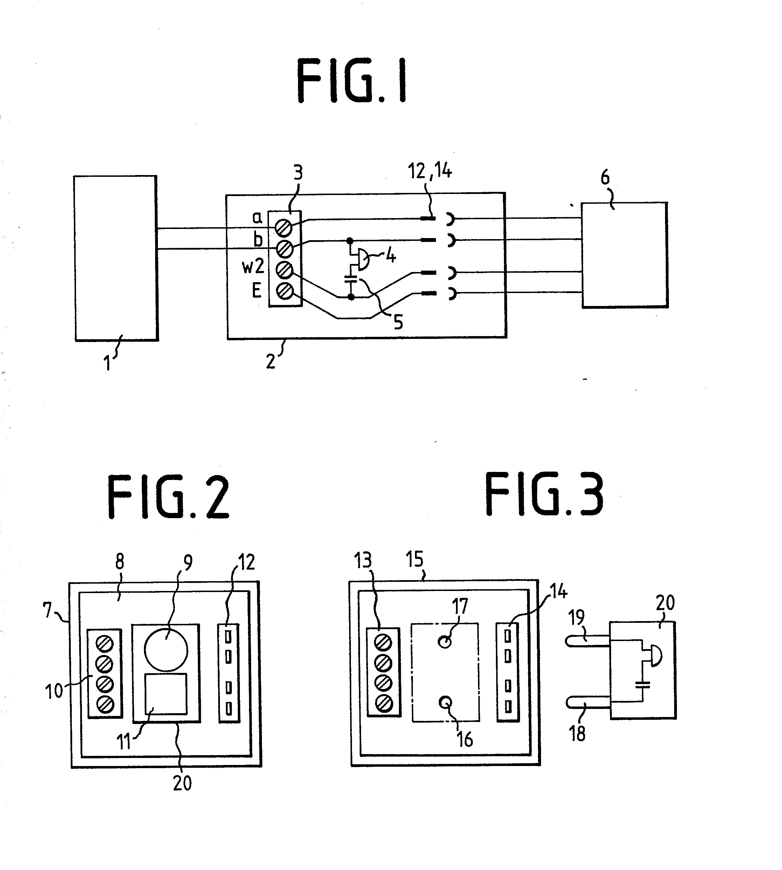

Gemäß Fig. 1 ist an die Vermittlungsstelle 1 die Anschlußdose 2 geschaltet, innerhalb derer sich einmal die übliche Bestückung 3 und ferner, an die Klemmen a und b angeschlossen, der Wecker 4 mit vorgeschaltetem Kondensator 5 befindet. An dem Steckanschluß 12, 14 dieser Anschalteeinheit 2 ist dann üblicherweise der Telefonapparat 6, der jetzt keinen Wecker mehr enthält, angeschlossen.

Die Draufsicht einer Anschlußdose 7 mit abgenommener Verschlußkappe gemäß Fig. 2 zeigt die Anordnung eines Weckers 9 auf der Trägerplatte 8 montiert. Zwischen den Reihenklemmen 10 und dem

- 4 -

Steckanschluß 12 ist ausreichend Installationsraum
für den Wecker 9 vorhanden, da der Bereich 11 der
übrigen Bauelemente dieser Anschlußdose 7 zufolge
der üblichen Miniaturisierung nur noch einen Bruchteil des früher benötigten Installationsraumes einnimmt.

Gemäß Fig. 3 sind zwischen den Reihenklemmen 13
und dem Steckanschluß 14 einer Verbindungsdose 15
die Steckdosenbuchsen 16 und 17 gelegt, in die die
Steckerstifte 18 und 19 der Signaleinrichtung 20
nach dem Einsetzen desselben greifen, wodurch diese
Signaleinrichtung 20 gleichzeitig montiert ist.

- 5 -

A n s p r ü c h e :

1.  Telefonanlage, dadurch g e k e n n z e i c h -
    n e t , daß der Wecker (4,9,20) in der Verbindungs- oder Anschlußdose (2,7) statt im
    Telefonapparat (6) untergebracht ist.

2.  Telefonanlage nach Anspruch 1, dadurch g e -
    k e n n z e i c h n e t , daß der Wecker
    (4,9,20) in die Verbindungs- oder Anschlußdose (2,7) integriert ist.

3.  Telefonanlage nach Anspruch 1, dadurch g e -
    k e n n z e i c h n e t , daß die Verbindungs-
    oder Anschlußdose (2,7) mit einer Steckdose
    (16,17) zur Aufnahme des Weckers (4,9,20)
    ausgestattet ist.

0070795

# FIG.1

# FIG.2    FIG.3

0070795

Nummer der Anmeldung

EP 82 73 0096

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 541 510  (SIEMENS) *Insgesamt* | 1,3 | H 04 M   1/02 |
| A | AU-A-  415 255  (STC) *Seite 3, Zeilen 24-27* | 1,3 | |

RECHERCHIERTE SACHGEBIETE (Int. Cl. 3)

H 04 M   1/02
H 04 M   19/04

Der vorliegende Recherchenbericht wurde für alle Patentansprüche erstellt.

| Recherchenort | Abschlußdatum der Recherche | Prüfer |
|---|---|---|
| DEN HAAG | 14-10-1982 | KEPPENS P.M.R. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82